# EUROPEAN PATENT SPECIFICATION

(11) **EP 3 180 265 B1**
(45) Date of publication and mention of the grant of the patent: **06.06.2018**
(21) Application number: 15741998.7
(22) Date of filing: 23.07.2015
(51) Int. Cl.: B65D 75/58, B65D 85/804, A47J 31/40

(54) **PACK FOR PREPARING FOODS OR BEVERAGES**
PACKUNG ZUR HERSTELLUNG VON NAHRUNGSMITTELN ODER GETRÄNKEN
EMBALLAGE POUR LA PRÉPARATION D'ALIMENTS OU DE BOISSONS

(30) Priority: 14.08.2014 EP 14181048
(43) Date of publication of application: 21.06.2017
(73) Proprietor: Nestec S.A., 1800 Vevey (CH)
(72) Inventor: VIVIER, Valérie, F-01220 Divonne les Bains (FR); DUBESSET, Claire, CH-1135 Denens (CH); BUTSCHER, Silvio, CH-2054 Chezard-St-Martin (CH)
(74) Representative: Navarro Fernández, Maria Isabel
(86) International application number: PCT/EP2015/066842
(87) International publication number: WO 2016/023728

(56) References cited:
- WO-A1-99/05044
- WO-A1-2011/054402
- WO-A1-2012/175985
- GB-A- 2 123 685
- US-A1- 2012 210 879

## Description

### Field of the invention

The present invention relates to a pack for the preparation of foods or beverages; in particular it refers to a disposable pack comprising a food or beverage ingredient, this pack being used for the preparation of foods or beverages in a reduced amount of time and having an optimal quality.

### Background of the invention

Preparing beverages by introducing a capsule containing a food or beverage ingredient, such as ground coffee or instant coffee, in a beverage dispensing machine and injecting water into the capsule is known in the state of the art: the beverage or food ingredient is typically extracted or dissolved into water to form the beverage or the desired final product, which flows out of the capsule through a suitable outlet.

As such, different capsules have been developed in the past, these capsules being at least differentiated by the nature of the capsule body used for storing the food or the beverage ingredient. Whereas most of the capsules are made of a rigid body or semi-rigid body, typically made though injection moulding or thermoforming, flexible types of packs can be made out of foil materials. Flexible packs9 have generally the advantage to semi-rigid and rigid capsules that less amount of material is used to pack the product which leads to overall less production cost, to lower life cycle impact shown in several life-cycle assessments and to advantages on the part of the user, who will need less available space for storing these packs, as they are more compact.

For example, WO 99/05044 describes a flexible beverage-producing sachet comprising a beverage ingredient in a volume formed by bonding two laminates at their edges, having a base seam into which a conduit of rigid plastics is bonded. An inlet nozzle is provided at the top of the resulting sachet for introducing water that is mixed with the beverage or food ingredient inside the inner volume of the sachet, the beverage produced being then evacuated through a beverage outlet arranged at the bottom of the pack, where closing means are provided, such that the closing means are adapted to open under pressure when pressurized water is introduced into the sachet, allowing the beverage to evacuate through the beverage outlet. However, this configuration presents important drawbacks for the consumer: the opening of the closing means is obtained by increase of pressure inside the sachet. Yet this pressure increase is not recommended for the preparation of some beverages because it creates bubbles at the surface of the beverage, for example this would not be desired for the preparation of tea. Besides, there exists the risk for the user that the packages may not rupture at the desired pressure, and that they would finally open up in an uncontrollable explosion. For this reason the apparatus where the sachet is processed needs to comprise means for totally enclosing the sachet in the machine during beverage preparation in order to avoid damages for the consumer.

It is also known from the state of the art, for example as per WO 2011/024103, a flexible pouch or sachet for preparing a beverage such as coffee, comprising a space where a concentrated dose of the product is stored. The pouch comprises also a rigid part on one of the sides of the pouch, provided with an inlet through which water is inserted into the pouch, a tube element conveying the water towards the opposite part of the pouch, so that the mixing of the water and the ingredient is made, and an outlet through which the product is dispensed. During the preparation of the beverage the beverage outlet is positioned at the top of the pouch. Water is introduced through the inlet and through the tube element until it fills the pouch and overflows through the beverage outlet positioned at the top of the pouch too. Such a pouch is conceived for preparing a beverage by extraction of roast and ground coffee but not by dissolution of instant coffee or other soluble materials. For this reason the pouch comprises a filter at the outlet to prevent insoluble particles from being dispensed with the beverage. An inconvenient of such a pouch is that at the end of the preparation of the beverage and the introduction of water, beverage remains in the pouch which is an issue for the user who cannot properly remove the pouch from the beverage production machine. Besides, in this pouch, neither the water inlet nor the beverage outlet are closed by a membrane, which is not recommended in terms of hygiene and shelf life as it could present problems to the consumer.

Known documents in the state of the art, such as WO 99/05044, GB 2 374 856 and WO 2012/175985 describe similar flexible packs made of two sheets of flexible air-and-liquid-impermeable material bonded on their edges to define an inner volume where the beverage ingredient will be stored. However, these flexible sachets present drawbacks, as already explained. Another drawback of these sachets is that the inlet spout introduces water in the pack always according to the same vertical top-down orientation in the sachet. Then all the beverages are produced according to the same process inside the sachet. Yet depending on the nature of the beverage ingredient and the desired beverage the beverage ingredient should be processed differently depending e.g. if foam is desired or not. In WO2012175985 a solution has been proposed which consists in proposing a beverage machine with different brewing heads (clamp) either for high pressure or low pressure beverage preparation, which is complicated and requires long time.

Another drawback of these sachets is that they do not enable the delivery of foamy beverages, in particular milky beverages, directly from the sachet. Foamy beverages must be frothed in the drinking cup with a water jet as described in GB2374586. This implementation requires a longer time to prepare a foamy beverage (first for preparing the beverage from the sachet, secondly for frothing the beverage with the water jet) and does not give the feeling of a high quality beverage to the consumer.

It is known in the state of the art document WO 2011/054402 A1, disclosing a capsule for preparing a food product, comprising a fitment (rigid connection portion) with at least one inlet to inject a fluid inside the capsule and at least one outlet to extract it. WO 2011/055402 A1 furthermore discloses a pack according to the preamble of claim 1. Also, different types of beverages will be desired to be delivered from a flexible pack: however, when using existing known flexible solutions for delivering for example long beverages, the consumer will need to wait for a long time to have the beverage prepared, which is certainly inconvenient. Besides, other types of thick products, for example beverages comprising pulp or the like, will not be able to be delivered using existing solutions. Even more, foamed food or beverage products are not able to be made either, as already explained. The present invention is therefore intended to solve these limitations.

The object of the present invention is to propose a pack for the preparation of a food or beverage that improves the above-mentioned problems in terms of manufacturing, beverage preparation simplicity and cleanliness, leading to an optimal overall beverage quality, allowing different types of food or beverages to be prepared, in a reduced amount of time.

The present invention comes to provide a solution to the above-described needs, as it will be further explained. The invention also aims at other objects and particularly at the solution of other problems as will appear in the rest of the present description.

### Summary of the invention

According to a first aspect, the invention refers to a pack (100 having an inner volume in which a food or beverage ingredient is stored and in which a food or beverage product is produced when a fluid is introduced inside, said inner volume being defined by sheets of material joined to one another at their edges and said inner volume presenting a generally plane shape defining a plane P essentially vertically oriented during beverage production. The pack 100 comprises at least one fluid inlet 110 for supplying a fluid in the inner volume of the pack 100 and at least two dispensing outlets 120, 130 for delivering the food or beverage product from said inner volume, said fluid inlet 110 and said dispensing outlets 120, 130 being positioned at the bottom of the pack 100 and being at least partially positioned between two joined edges of the sheets of material. The fluid inlet 110 is oriented essentially perpendicularly to the plane P defined by the inner volume, the dispensing outlets 120, 130 being arranged in the vicinity one to another. More preferably, the dispensing outlets 120, 130 are configured as essentially parallel tubes arranged essentially vertically from the inner volume, though they can also be arranged forming an angle between them, as long as they dispense the food or beverage product into the dedicated receiving means, typically a drinking cup. Besides, the dispensing outlets 120, 130 are configured presenting a sufficient section to enable a flow of the food or beverage product form the pack 100, more preferably enabling a free flow by gravity.

According to the invention, the at least two outlets 120, 130 of the pack 100 can have the same or different diameter.

The pack 100 can comprise a single fitment assembly 10 including the fluid inlet 110 and the dispensing outlets 120, 130, said fitment assembly 10 being positioned at the bottom of the pack 100 and being partially positioned between two joined edges of the sheets of material.

According to the invention, the at least two dispensing outlets 120, 130 can be made in separate inserts, the inserts being arranged at the bottom of the pack 100 and being partially positioned between two joined edges of the sheets of material. According to the present invention, the at least two dispensing outlets 120, 130 of the pack 100 differ by their internal design.

In a first embodiment, the internal design of at least one of the dispensing outlets is configured for limiting the presence of bubbles in the food or beverage product dispensed, preferably such that the internal conduit of the dispensing outlet comprises at least one transverse plate with at least two holes, said holes having a design configured for breaking bubbles while the beverage or product flows through.

In a second embodiment, the internal design of at least one of the dispensing outlets is configured for adjusting the size of the bubbles in the food or beverage product dispensed, preferably such that the internal design of the dispensing outlet is configured for dividing the flow of food or beverage product entering in the internal conduit in several separated sub-flows of food or beverage at the end of the internal conduit of the dispensing outlet.

In a third aspect, the internal design of at least one of the dispensing outlets is configured for improving mixing of the food or beverage ingredient and fluid before dispensing, particularly in such a way that the dispensing outlet comprises a static mixer in order to increase flow turbulence inside the internal conduit of the dispensing outlet and/or to increase the path of the food or beverage flow in the internal conduit of the dispensing outlet.

Also according to the invention, the pack 100 can comprise an evacuating liquid outlet which can be pierced for evacuating liquid from the inner volume of the pack 100.

Also according to the present invention, the fluid inlet 110 of the pack 100 is configured for providing an orientable high velocity jet 6 into the inner volume of the pack 100.

The pack 100 can further comprise identification means 60 comprising the parameters information for the fluid supply into the fluid inlet 110, at least one or a combination of: flow rate of fluid, temperature of fluid supply and/or total volume of fluid introduced in the fluid inlet 110 and/or duration of the jet supplied and/or pause in between jets.

According to a second aspect, the invention refers to a machine 200 for preparing a food or beverage product from a pack 100 comprising a receiving area 201 adapted to accommodate the pack 100 in an essentially vertical position during beverage production with the fluid inlet 110 and the at least two dispensing outlets 120, 130 being arranged at the bottom of the pack 100, the machine further comprising injecting means 30 designed for accommodating fluid into the fluid inlet 110.

Also according to the second aspect of the invention, the machine 200 can further comprise a data reader retrieving the parameters information for the fluid supply into the fluid inlet 110, at least one or a combination of: flow rate of fluid, temperature of fluid supply and/or total volume of fluid introduced in the fluid inlet 110 and/or duration of the jet supplied and/or pause in between jets.

### Brief description of the drawings

Further features, advantages and objects of the present invention will become apparent for a skilled person when reading the following detailed description of non-limiting embodiments of the present invention, when taken in conjunction with the appended drawings, in which:
Fig. 1 shows a general schematic view of a possible configuration of a disposable pack for preparing food or beverages according to the present invention.
Fig. 2 shows the different steps carried out for manufacturing a disposable pack for preparing food or beverages according to the present invention.
Fig. 3 shows schematically a possible configuration of the fluid inlet and injection hole in a fitment assembly of a disposable pack for preparing food or beverages according to the present invention in order to configure a water jet.
Figures 4a-b-c-d-e-f-g-h show different embodiments of the dispensing outlets in a fitment assembly of a disposable pack for preparing food or beverages according to the present invention.
Figures 5a-b show a first possible embodiment for the internal design of the dispensing outlet in a fitment assembly of a disposable pack for preparing food or beverages according to the present invention.
Figures 6a-b show a second possible embodiment for the internal design of the dispensing outlet in a fitment assembly of a disposable pack for preparing food or beverages according to the present invention.
Figures 7a-b show a third possible embodiment for the internal design of the dispensing outlet in a fitment assembly of a disposable pack for preparing food or beverages according to the present invention.
Figures 8a-b illustrate the movement of the liquid in the inner volume in the main plane P a disposable pack for preparing food or beverages according to the present invention.
Figure 9 shows the positioning of a disposable pack for preparing food or beverages on a slightly slanted plane in a food or beverage preparation machine according to an embodiment of the present invention.
Figure 10 shows the introduction of a disposable pack for preparing food or beverages according to a globally horizontal sliding movement in a food or beverage preparation machine according to another embodiment of the present invention.
Figure 11 shows the introduction of a disposable pack for preparing food or beverages according to a vertical sliding movement in a food or beverage preparation machine according to yet another embodiment of the present invention.
Figure 12 shows the interaction of a disposable pack for preparing food or beverages according to the present invention with a food or beverage preparation machine.
Figure 13 illustrates the possibility to create a range of disposable packs for preparing food or beverages with the same fitment assembly differing by the size of the inner volume, according to the present invention.

### Detailed description of exemplary embodiments

The present invention relates to a *disposable pack 100* having an inner volume in which a food or a beverage ingredient is stored. When a fluid, typically water, is introduced in the inner volume of the pack 100 a food or a beverage is produced.

The disposable pack 100 according to the invention comprises at least one fluid inlet 110 for supplying a diluent in the inner volume of the pack 100. The pack 100 further comprises at least two dispensing outlets, a primary dispensing outlet 120 and a secondary dispensing outlet 130, through which the dispensing of the food or beverage from the inner volume of the pack, once prepared, takes place. With this configuration, the flow of the food or beverage product produced is improved and the dispensing time is minimised, especially when long beverages are prepared from a pack 100, therefore making that the flow time is globally optimised. Preferably, the fluid inlet 110 and the dispensing outlets 120, 130 are positioned next to the bottom of the pack 100.

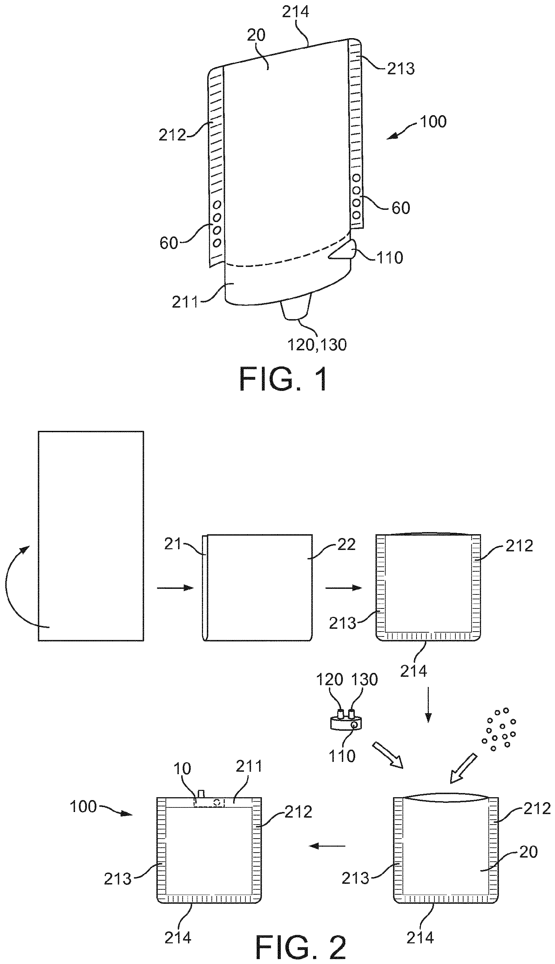

In the present application the terms "bottom", "top", "lateral", "horizontal" and "vertical" are used to describe the relational positioning of the features of the invention. These terms should be understood to refer to the pack in its normal orientation when introduced in a food or beverage preparation machine for the production of a food or beverage as shown for example in Figure 1. Preferably, the normal orientation of the pack will be essentially vertical.

According to the invention "next to the bottom" means that both the fluid inlet and the dispensing outlets are positioned on the bottom edge of the pack and/or on the bottom part of one of the lateral sides of the pack. The invention covers different variants where the fluid inlet and the dispensing outlets are on the same edge of the pack, either on the bottom edge or at the bottom part of a lateral side of the pack, also covering the variants where the fluid inlet is either on the bottom edge of the pack or on the bottom part of one of the lateral sides of the pack, the dispensing outlets being positioned at the bottom edge of the pack and also variants where the fluid inlet is positioned frontally at the bottom part of the pack and the dispensing outlets are positioned at the bottom edge of the pack. According to the invention the bottom part of a lateral side of the pack generally corresponds to the part of said lateral side positioned below the middle part of the pack and preferably closer to the bottom part of the pack rather than the middle part of the pack.

In the present invention the term "fluid" covers any aqueous diluent that can be mixed with a soluble food or beverage ingredient to prepare a beverage, like water, carbonated water, milk, etc. or a food from a fluid ingredient being diluted. However, according to the invention, water is the preferred fluid which will be used.

Preferably the pack comprises two flexible water impermeable sheets joined to one another to define the inner volume of the pack. As a consequence the pack itself is substantially flexible and looks like a pouch or sachet. By flexible, it is meant that the sheets can be bent easily. The resulting pack can be bent also; it is soft and can be deformed contrary to rigid containers. The flexible sheet material can be plastic laminates, metallised foil or alufoil or fibre base material. According to the invention the two flexible water impermeable sheets can be formed of one single flexible water impermeable sheet folded in half and joined at its free edges. This embodiment constitutes a particularly easy way to manufacture the pack 100 since it requires the cutting of only one piece of sheet - most preferably according to a rectangular shape - and its folding to create the inner volume for the food or beverage ingredient. Typically, also for manufacturing convenience, the fitment assembly 10 is introduced in the bottom edge of the container during the sealing of its edges.

According to a specific embodiment the pack can comprise more than two sheets, in particular to increase the size of the inner volume. At least another sheet can be joined to the two first sheets that define the inner volume and the generally plane shape according to a plane. For example, said other sheet(s) can create a doypack shape for the inner volume of the pack or any other shape. Generally said other sheet(s) is/are joined to the edges of the two first sheets of material which do not comprise the fluid inlet and the dispensing outlets.

It is preferred that the pack presents a generally plane shape. Preferably the plane shape is essentially vertically oriented during food or beverage production, with the fluid inlet and the dispensing outlets arranged next to the bottom of the pack.

In the present invention the fluid inlet and the dispensing outlets can be made in one single insert or in separate inserts positioned in the pack.

The pack 100 of the invention preferably comprises a *fitment* *assembly 10 and* a *food or beverage container 20:* the fitment assembly 10 typically comprises the fluid inlet 110 and the at least two dispensing outlets 120 and 130, and is preferably made as one piece in a rigid plastic material, preferably made by injection moulding. This plastic material can be selected in the list of: polypropylene, polyethylene, polyethylene terephthalate and polylactic acid. According to a less preferred embodiment the insert can be made out of a metal like aluminium or tin-plate. The container 20 is preferably flexible and comprises the inner volume where the food or beverage ingredient is stored.

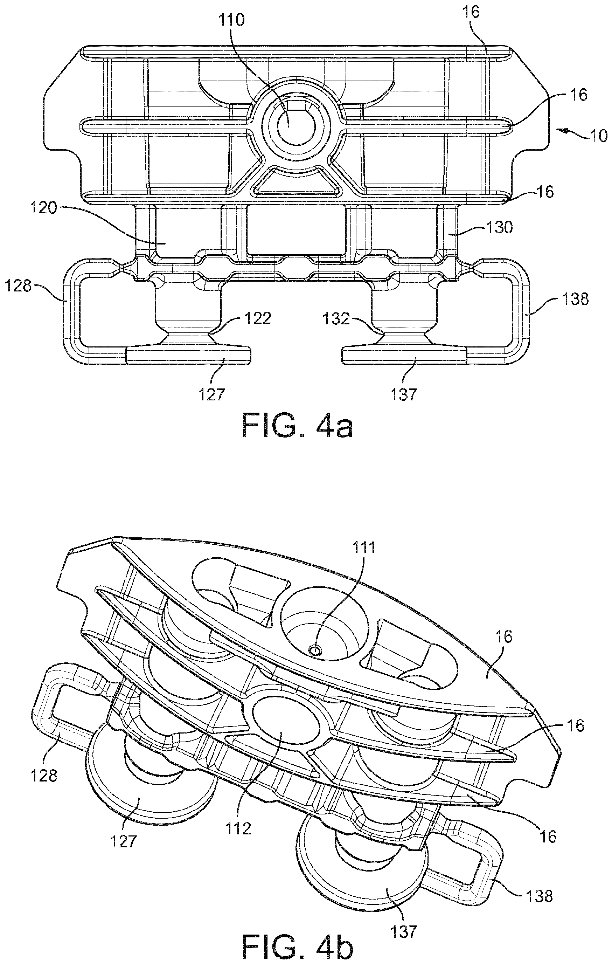

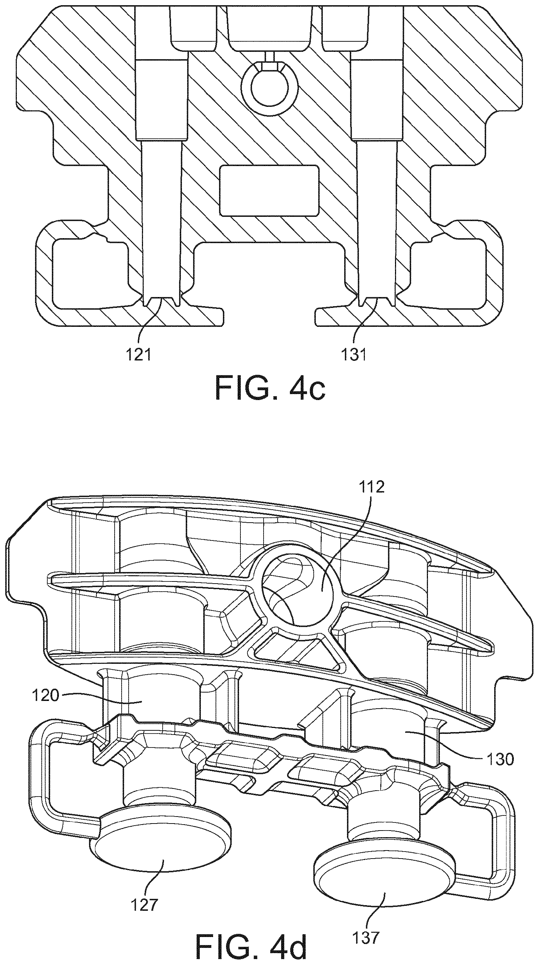

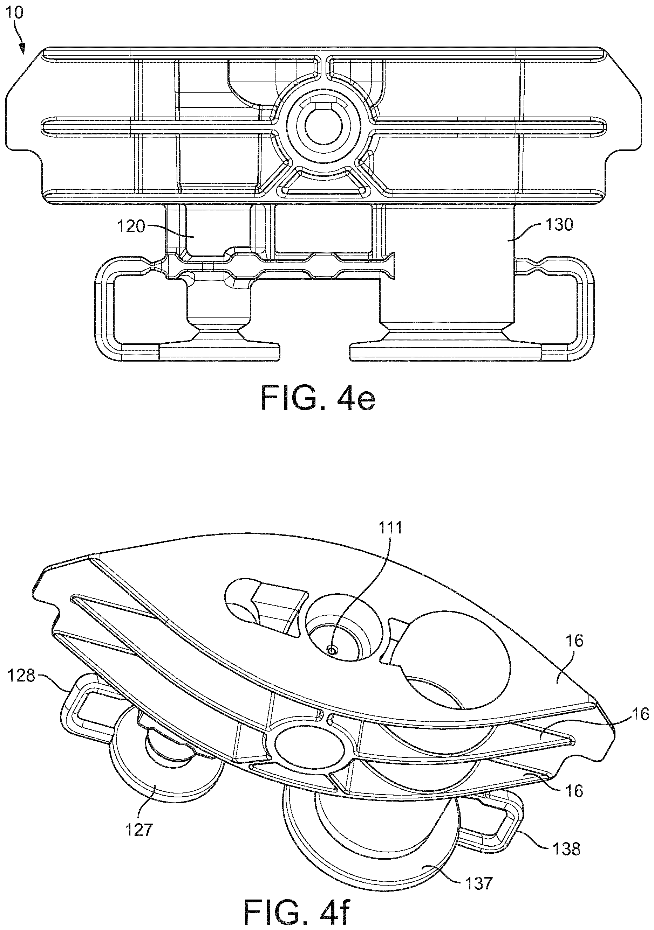

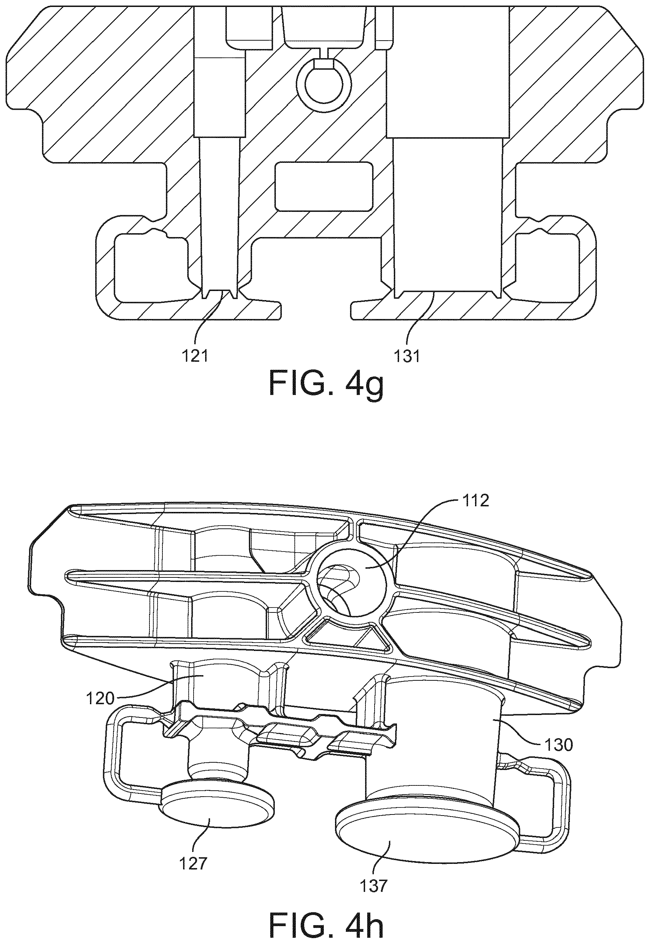

According to a preferred embodiment of the invention, the fluid inlet 110 is arranged frontally in the fitment assembly 10 and the at least one dispensing outlets 120, 130 are configured as a straight tubes or ducts arranged parallel to the sheets configuring the container 20 so that it allows the dispensing by gravity of the food or beverage product prepared. The fluid inlet 110 and the dispensing outlets 120, 130 are therefore arranged, according to this preferred embodiment, perpendicular with respect to each other. This is illustrated in Figures 4a-h, for example.

According to the present invention the food or beverage ingredient of the pack can be comprised within the list of: soups, fruit juices, vegetable juices, bouillons, coffee, chocolate, tea, milk or creamer, smoothies, purees, coulis, creams or a combination thereof.

The food or beverage ingredient can be a soluble food or beverage ingredient. Preferably the food or beverage ingredient is a soluble food or beverage ingredient selected in the list of:
- instant coffee powder, milk powder, cream powder, instant tea powder, cocoa powder, soup powder, fruit powder or mixture of said powders,
- a coffee concentrate, a milk concentrate, a syrup, a fruit or vegetable concentrate, a tea concentrate, a fruit or vegetable puree.

The powders can be agglomerated or sintered. The powders or liquid concentrates can be mixed with solid pieces for example for preparing soups with solid pieces.

The food or beverage ingredient can also be an infusable food or beverage ingredient like a roast and ground coffee or tea leaves. In that embodiment water extracts the infusable ingredient.

The fluid inlet 110 of the fitment assembly 10 is preferably configured as a yieldably piercable inlet 110 through which a diluent can be supplied into the inner volume of the food or beverage container 20 in order to properly mix the food or beverage ingredient contained in it with the diluent to prepare the subsequent food or beverage product.

The food or beverage container 20 preferably comprises two flexible water impermeable sheets 21, 22 joined one to another on their edges 211, 212, 213, 214 to define an inner volume where the food or beverage ingredient is stored. These two sheets 21, 22 can also be obtained by folding one single sheet in its middle part to form the top part 214 of the pack 100: in this case, only the edges 211, 212 and 213 have to be bonded together as illustrated in Figure 2. Preferably, the bonding is done by heat sealing or thermo sealing.

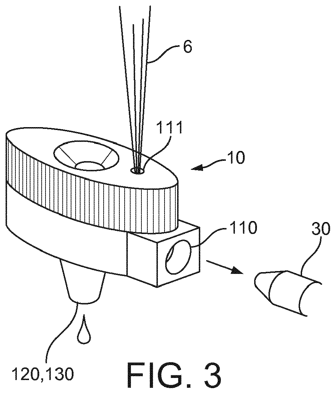

The fluid inlet 110 preferably is configured for supplying fluid, preferably water, in the form of a jet 6 into the inner volume of the container 20 through an injection hole 111, as represented in Figure 3.

Figures 1 and 3 show the fluid inlet 110 being arranged in one of the sides of the fitment assembly 10. However, it should be noted that the preferred embodiment according to the invention would be to arrange the fluid inlet 110 frontally in the fitment assembly 10, as depicted in Figures 4a-h.

The fluid inlet 110 typically comprises an external lid which is the part of the inlet 110 being piercable: the lid is preferably made of one of the flexible sheets 21 or 22 when laid over the fitment assembly 10, for manufacturing convenience. Also, the fitment assembly 10 comprises at least two dispensing outlets 120, 130 through which the food or beverage product is dispensed. Once the food or beverage medium stored inside the volume of the container 20 is diluted with water coming from the injection hole 111, the food or beverage prepared is directed towards the two dispensing outlets 120, 130 from which it is dispensed. According to another embodiment of the invention, the fluid inlet 110 can be made as a through hole passing from one side to the other of the fitment assembly 10 i.e., passing from frontal to rear side and vice versa. On each side, frontal and rear, an external piercable lid will be provided such that, when piercing means pierce this lid frontally or on the rear side, fluid will be in any case injected and will be introduced in the pack through the injection hole 111. With such configuration, the pack is made reversible.

Typically, the two dispensing outlets 120 and 130 are both comprised in the fitment assembly 10 made of one single rigid piece or part, which will be preferably arranged at the bottom edge 211 of the pack 100 or at the bottom part of one of the lateral edges 212, 213 of the pack 100. It can also be that the fluid inlet 110 together with the injection hole 111 is made in one rigid insert, which can be positioned at the bottom of the pack 100, meaning that it is arranged at the bottom edge 211 of the pack 100 or at the bottom part of one of the lateral edges 212, 213 of the pack 100, and the two dispensing outlets 120 and 130 will then be made in one or two separate rigid inserts which will be arranged at the bottom edge 211 of the pack 100.

Preferably, the two dispensing outlets 120, 130 are configured as straight holes either enclosed in the fitment assembly 10 or in one or different rigid inserts.

In the embodiments illustrated in Figures 1 the injection hole 111 is configured for introducing a water jet 6 essentially upwardly and vertically inside the inner volume of the container 20. Yet as illustrated in Figures 3 the fluid inlet 110 could also be a straight hole essentially horizontally oriented and introducing the water jet 6 through the injection hole 111 essentially upwardly and vertically inside the inner volume of the container 20.

The fluid inlets and the dispensing outlets can be straight holes inside inserts or inside the fitment assembly because they are easy to manufacture. Yet other embodiments wherein the inserts define holes with at least one change of direction can be also implemented. Such a change of direction can be helpful to improve the interface of the inserts with the food or beverage preparation machine, in particular the interface between the machine water supply and the inlet insert. Such a change of direction can be helpful to control the water velocity in the inner volume of the container and/or the water jet orientation in the inner volume of the container also. The single insert configured as a single fitment assembly presents the advantage of being easily positioned in the edges of the pack when it is manufactured compared to two or more separate inserts.

The dispensing outlets 120, 130 are preferably configured so that they deliver the food or beverage product as a flow, more preferably as a free flow, meaning that the product can flow from the dispensing outlets 120 and 130 by simple gravity fall therefore presenting a sufficient section so as to enable a flow of the beverage or food product from the pack. According to a preferred embodiment of the invention, the dispensing outlets 120, 130 are straight tubes having a diameter comprised between 1 mm and 4 mm, more preferably comprised between 1.5 and 3 mm, even more preferably in the range of around 3 mm. Typically, when long beverages are dispensed from the pack 100, both the primary dispensing outlet 120 and the secondary dispensing outlet 130 have a diameter comprised in these ranges, so that the beverage is delivered in short time. The two dispensing outlets 120 and 130 can have the same diameter or a different one. Moreover, these dispensing outlets 120 and 130 typically comprise a weakened area 122, 132 preferably made as a narrowing of the tube: this part will typically be cut and opened for beverage or food dispensing, as it will be further explained in more detail. The dispensing outlets 120, 130 also preferably comprise an opening 121, 131 at the bottom of the fitment assembly 10, said opening 121, 131 having a transverse section with a surface area equivalent to the surface of a circular surface of diameter of at least 1 mm, preferably at most 4 mm, more preferably comprised between 1.5 and 3 mm, and even more preferably comprised in the range of around 2 mm.

When a thick beverage or food product is intended to be produced and dispensed from the pack 100 of the invention, for example beverages or food products having pulp or thicker elements, at least one of the dispensing outlets 120, 130 will have a bigger diameter, typically higher than 5 mm, preferably in the range of around 6 mm. In this case, the dispensing outlet will also be provided with a weakened area, preferably made as a narrowing of the tube. The opening 121, 131 of the dispensing outlets 120, 130 in this case will be of around less than 5 mm.

The dispensing outlets 120, 130 are typically configured as straight tubes oriented essentially vertically in the fitment assembly 10, comprising at their ends an opening 121, 131 through which the prepared food or beverage product will be dispensed. The length of the tubes will preferably be of at least 5 mm. Such a length generally enables a finalisation of the froth of the product, typically a beverage, before it is delivered in a drinking cup 9. An advantage of the dispensing outlets 120, 130 of the present invention is that there is no need to implement a particular connection between them and the machine when a beverage is for example produced, in order to direct the flow of the beverage delivered from the dispensing outlets 120, 130: the beverage can flow from the dispensing outlets 120, 130 directly into a drinking cup 9.

Figures 4a-b-c-d-e-f-g-h show different embodiments or possible executions of the fitment assembly 10 of the invention comprising the fluid inlet 110 and two dispensing outlets, 120 and 130, which can have different diameters or can have the same diameter, depending on the type of food or beverage product in the pack 100 which is targeted.

Also according to the invention, the dispensing outlets 120 and 130 differ by their internal designs: for example the primary dispensing outlet 120 can be internally designed for dispensing a flat beverage and the secondary dispensing outlet 130 can be internally designed for dispensing a foamed beverage, as will be further explained. Typically, the internal designs of the dispensing outlets aims at providing different effects, at least one or a combination of: foam improvement, product mixing improvement, break foam to remove the foam (for flat beverages), or outlet diameter adjustment.

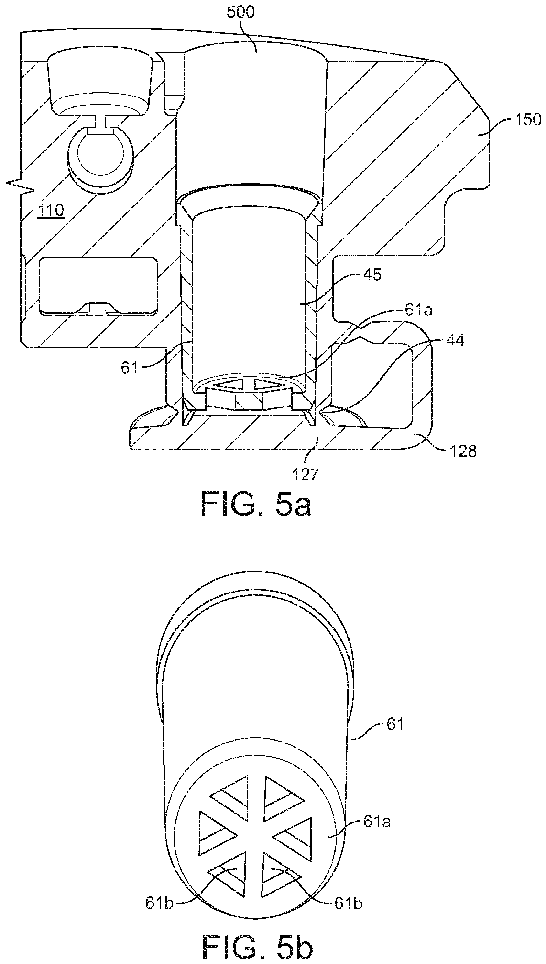

Figure 5a illustrates a first possible embodiment of the internal design of the dispensing outlets: externally, the fitment assembly 10 in which the dispensing outlets 120, 130 are arranged presents the same features as described before. However, Figure 5a shows a longitudinal cross section view of the fitment assembly 10 making apparent the internal design of one of the dispensing outlets 120, which comprises an internal conduit 45. This internal conduit 45 is an essentially straight conduit. At the bottom end of the conduit the outlet comprises one transverse plate 61a with six holes 61b presenting the shape of triangles. The triangles are positioned one to the other so as to form a grid of straight lines. When a beverage flows through the pierced plate 61a the flow of beverage is almost not restricted compared to the flow of beverage through the same dispensing outlet devoid of pierced plate. Yet the grid formed by the triangles breaks the bubbles of the beverage when entering in contact with the plate. The internal conduit 45 together with the plate 61a are positioned in the internal conduit above the connection 44 between the outlet duct and the closing plug 127 so that when the plug is cut or torn the plate 61a is positioned at the bottom end of the dispensing outlet 120.

According to another embodiment of the invention, an extra transverse plate, similar to 61a, can be placed in the hollowed out part 500, between the connection of said part 500 with the internal conduit 45, for an extra foaming.

Figure 5a also illustrates another possible embodiment for the internal design explained for the dispensing outlet 120, such that the fitment assembly 10 is made of two composing parts: a single insert body 150 comprising the fluid inlet 110 and at least one hollowed out part 500 extending vertically from the top surface of the single insert body 150, the hollowed out part 500 remaining closed at its bottom by the closing plug 127; a design adaptor 61 comprising a transverse plate 61a defining the internal design of the dispensing outlet 120. Figure 5b illustrates said design adaptor 61 alone that has not yet been introduced inside the hollowed out part 500 of the single insert body 150.

The design adaptor 61 and the hollowed out part 500 present conformal shapes and dimensions so that the design adaptor 61 can slide in the hollowed out part 500 and exactly fit inside to become the internal conduit of the dispensing outlet of the fitment assembly 10. Generally the design adaptor 61 and the hollowed out part 500 present tubular shapes. In the illustrated embodiment the design adaptor 61 is a tube presenting a smaller length than the length of the hollowed out tube.

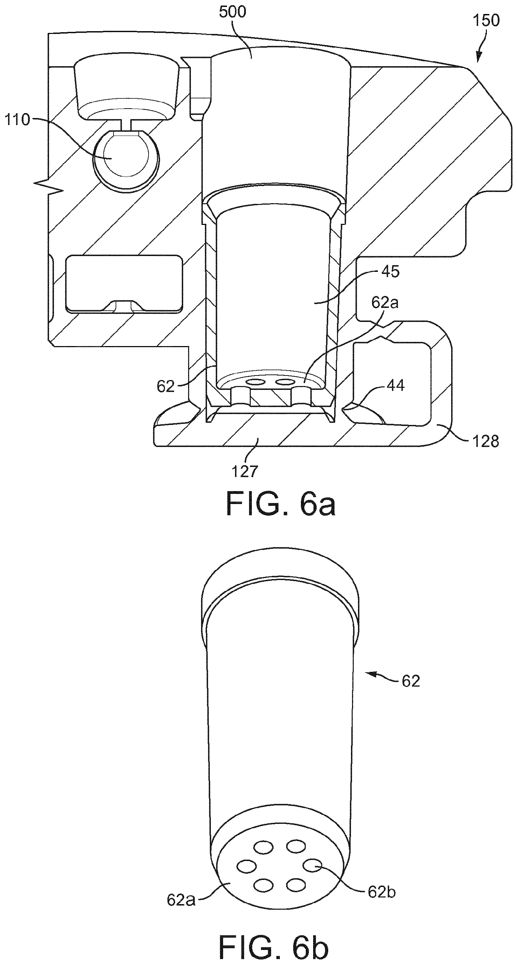

Figure 6a illustrates a second possible embodiment of the internal design of the dispensing outlets: externally, the fitment assembly 10 in which the dispensing outlets 120, 130 are arranged presents the same features as described before. However, Figure 6a shows a longitudinal cross section view of the fitment assembly 10 showing the bottom end comprising one transverse plate 62a with six round holes 62b. When a beverage flows through the pierced plate 62a the flow of beverage is divided in six sub-flows. Due to the rather small size of the holes 62b the sub-flows are well separated and air in between the different sub-flows is carried along the beverage sub-flows and mix with the beverage creating foam in the beverage. The holes in the plates are designed to create a shower of beverage. The plate 62a is positioned in the internal conduit above the connection 44 between the outlet duct and the closing plug 127 so that when the plug is cut or torn the plate 62a is positioned at the bottom end of the dispensing outlet.

The fitment assembly 10 of Figure 6a is made by the association of the same single insert body 150 illustrated in Figure 5a and of a design adaptor 62 defining the internal design of the dispensing outlet. Figure 5b illustrates said design adaptor 62 alone that has not yet been introduced inside the hollowed out part of the single insert body. Said design adaptor 62 presents the same external shape as the design adaptor 61 of Figure 5b in order to cooperate with the single insert body 150 but it presents a different plate 62b in order to define a different internal design of the dispensing outlet.

According to another embodiment of the invention, an extra transverse plate, similar to 62b, can be placed in the hollowed out part 500, between the connection of said part 500 with the internal conduit 45, for an extra foaming.

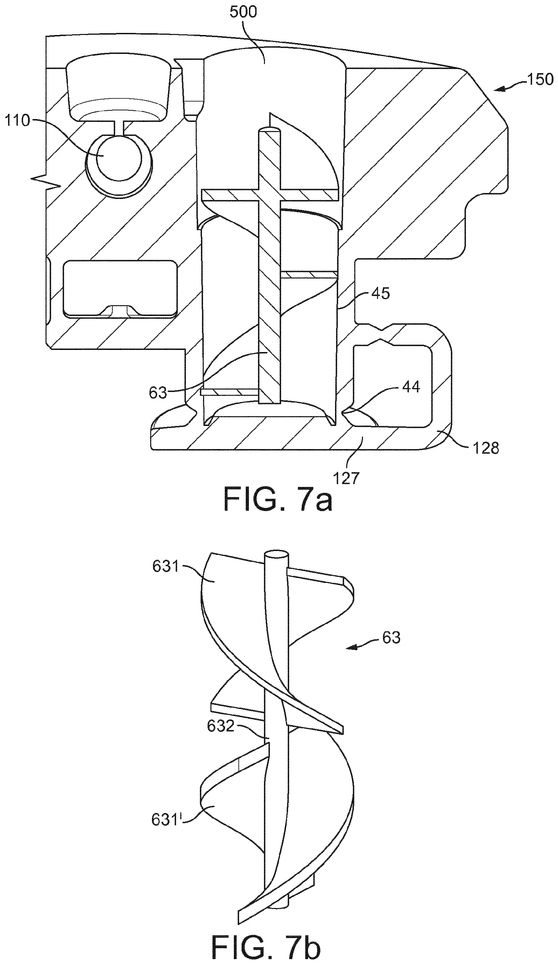

Figure 7a illustrates a fitment assembly 10 according to a third mode of the present invention. It presents the same features as the fitment assembly 10 of Figure 5a except that the internal design of the dispensing outlet comprises a mixing device 63 consisting in mixing blades. In the illustrated embodiment the mixing blades are helicoidally arranged blades 631, 631' positioned around a longitudinal axis 632. When a beverage flows through the dispensing outlet, a turbulent flow is created by the mixing blades 631, 631' which increases mixing and dissolution in the beverage before it is dispensed at the bottom of the dispensing outlet.

The fitment assembly 10 of Figure 7a is made by the association of the same insert body 150 illustrated in Figure 5a and of a design adaptor 63 defining the internal design of the dispensing outlet. Figure 7b illustrates said design adaptor 63 alone that has not been introduced inside the hollowed out part of the single insert body.

According to the invention, before the food or beverage preparation step, the dispensing outlets 120, 130 are closed at their ends. Generally the dispensing outlets are closed by manufacturing and are configured for being opened at food or beverage production step. By "closed by manufacturing" it is meant that a complete pack, comprising the container 20 and the fitment assembly 10, is manufactured with closed dispensing outlets 120, 130. This closure guarantees hygienic and shelf life protection. The dispensing outlets 120, 130 can be opened by a food or beverage preparation machine or manually.

Preferably the pack 100 is not pressurized during the beverage or food preparation. This effect can be obtained by opening one or two of the dispensing outlets 120, 130 before water is introduced in the pack or simultaneously to the introduction of the water in the pack or a little bit after the introduction of the water in the pack. Globally the beverage or food product is prepared with both the fluid inlet 110 and one or both of the dispensing outlets 120, 130 being opened.

Preferably the dispensing outlets 120, 130 are closed by closing plugs 127, 137 as represented schematically in Figures 4a-b-c-d or Figures 5a-b-c-d, said closing plugs 127, 137 comprising means for maintaining them attached to the fitment assembly 10 after the opening of the dispensing outlets 120, 130. Consequently these plugs 127, 137 do not fall in the beverage or food during their production. The means for maintaining the plugs 127, 137 attached to the fitment assembly 10 can be plastic bonds 128, 138 attached to the fitment assembly 10, for example, or any other suitable means providing a similar effect. Moreover, the weakened areas 122, 132 in the dispensing outlets 120, 130 are typically near these closing plugs 127, 137, being typically made narrowing the dispensing outlet tubes so that it is easier to cut or tear off the plugs 127, 137 by the machine or manually by the consumer.

Even when the preferred embodiment is to close the pack 100 by the closing plugs 127 and 137, it would also be possible to close the container 20 itself in addition or alternatively to the use of these plugs 127, 137.

Preferably the closing plugs 127, 137 are part of one single fitment assembly 10 comprising the dispensing outlets 120, 130 and the fluid inlet 110. In particular when the fitment assembly 10 is made by injection moulding, the design of the mould also comprises the plugs 127, 137. In the same manner the plastic bonds 128, 138 can also be part of the design of the fitment assembly 10 when it is made by injection moulding, which again provides advantages from a manufacturing point of view, as the same part comprises the fluid inlet 110, the dispensing outlets 120, 130, the closing plugs 127, 137 and the bonds 128, 138.

Preferably, the fluid inlet 110 is piercable by piercing means 30 comprised in a food or beverage preparation machine. The piercing means 30 typically have two functions: they pierce the lid or external cover typically arranged outside the fluid inlet 110, and they also inject fluid at pressure into the fluid inlet 110. Preferably, the piercing means 30 comprise a fluid needle, called in what follows needle, typically a water needle: these piercing means 30 typically comprise an inner duct or pipe through which high pressure fluid is injected in the fluid inlet 110. These needles can have any kind of external shape or configuration, as the main requirement is that they pierce the external lid properly and that they can inject fluid at the desired pressure. Preferably, fluid is injected at a pressure higher than 2 bar, more preferably higher than 3 bar. Preferably, the fluid is injected at a pressure comprised in the range between 2 and 10 bar, more preferably around 7 bar. The fluid inlet 110 is configured in such a way that the high pressure fluid injected through it by the piercing means 30 is converted into a high velocity jet 6, which is driven into the inner volume of the container 20. Typically, the fluid inlet 110 comprises a yieldably piercable cover or lid over it, typically configured by the flexible sheets of the container 20 laid over it, which can be pierced by the piercing means 30 of the machine once the preparation of the food or beverage product starts. The piercing means 30 preferably also comprise a toroidal ring, preferably made of rubber, ensuring that there is no leakage of fluid outside the fluid inlet while the piercing means 30 are injecting fluid into the fluid inlet. The fluid inlet 110 is communicated with the inside volume of the container 20 through an injection hole 111 which has a diameter of at most 1 mm, more preferably of at most 0.6 mm, preferably of at least 0.24 mm, preferably comprised between 0.3 mm and 0.5 mm, more preferably of about 0.4 mm, which is particularly adapted when the fluid is delivered at the fluid inlet 110 at a pressure comprised between 2 and 10 bar. With such a configuration, the high pressure fluid injected by the piercing means 30 is conveyed internally in the fluid inlet 110 towards the injection hole 111, from which it is converted into a high velocity jet of fluid injected inside the inner volume of the container 20 when passing through the small section of the injection hole 111. Typically, this jet of fluid provided in the container 20 has a velocity of at least 20 m/s, depending on the diameter of the injection hole 111. The shape of the small section of the injection hole 111 can be of any kind; however, circular section is preferred for easy manufacturing.

The fluid inlet 110 presents an inlet chamber 112 at its entrance configured as a hollow cavity, which is globally horizontally oriented. Its dimensions are configured for receiving the piercing means 30, typically configured as a hollow needle of a beverage preparation machine in order to allow that a fluid, preferably water, is injected in the fluid inlet 110. The inlet chamber 112 presents an evacuation end preferably arranged in its upper lateral wall corresponding to an injection hole 111 from which water can be injected in the inner volume under the form of jet 6. The hole is typically circular. Due to the configuration of the fluid inlet 110 the water can be injected essentially horizontally in the inlet chamber 112 and essentially vertically in the inner volume of the pack.

The fluid jet which is created inside the container 20 avoids that the food or beverage product flows through the dispensing outlets too rapidly: therefore, the time of agitation of the ingredient together with the fluid inside the container volume is increased.

By jet it is understood a stream of liquid or fluid that comes out of the fluid inlet and into the inner volume of the food or beverage container quickly and with force. Therefore, the fluid inlet 110 is configured for introducing fluid in the inner volume of the container 20 with a high velocity, this fluid jet preferably presenting a velocity of at least about 20 m/s, preferably at least 30 m/s. As previously described, such a configuration is preferably obtained in the present invention by placing a constriction (that of the injection hole) in the fluid path in the fluid inlet to reduce the size of the section of the fluid inlet. Due to the small surface of the injection hole through which the fluid goes into the inner volume of the container, the pressurized fluid creates a jet in the inner volume of the container 20.

According to the invention, the fluid inlet 110 can also be configured for providing an orientable high velocity jet into the container 20, preferably at about 90° with respect to the fluid supply provided into the fluid inlet 110 by the piercing means 30, though any other angle would be possible and comprised within the scope of the present application.

The small surface of the injection hole 111 presents the advantage of avoiding any back flow of fluid from the inner volume of the container 20 into the fluid inlet 110. For the same fluid to be provided through the fluid inlet 110, the surface of the injection hole 111 can vary according to the nature of the food and beverage ingredient inside the container 20 which is to be mixed with the fluid. In particular when the ingredient is difficult to dissolve a smaller injection hole 111 creates a jet with a higher velocity which improves agitation and dissolution of this ingredient in the container 20.

The pack 100 of the invention can therefore be provided with the same fitment assembly 10 but with different sizes of containers 20, typically varying in their height or vertical length. Different food or beverage ingredients can be stored inside the pack 100, so it becomes possible to produce different products, such as for example a cup of espresso coffee or a bowl of soup. The external design and configuration of the fitment assembly 10 will remain unchanged independently on the product targeted; however, the internal design of the fitment assembly 10, in particular as to the diameter of the injection hole 111 will differ as a function of the ingredient to be processed and therefore as a function of the food or beverage product targeted. Also, other parameters will be varied as a function of the food or beverage product targeted, typically the fluid flow rate injected by the injection means into the fluid inlet 110, the temperature of the fluid injected and/or the total volume of fluid injected. These parameters will be provided by the food or beverage preparation machine.

According to the invention at least two types of packs essentially differing by their ability to produce a foamy beverage or a non-foamy beverage will be provided. The first type of pack that is able to produce a foamy beverage generally presents a fluid inlet configured for introducing a water jet 6 in the inner volume of the pack with a higher velocity than the second type of pack. The first type of pack preferably presents two dispensing outlets configured for keeping the beverage as long as possible in the inner volume of the pack. Then the injection hole of the first type of pack presents dispensing outlets with surface area equivalent to the surface of a circular surface of diameter smallest than for the second type of pack. The first type of pack also preferably presents a shape configured for improving the movement of the fluid and the beverage in the container during beverage or food preparation. It has been observed that rectangular containers presenting a ratio length/width of about 4/3 and with the fitment assembly 10 placed at the width side improve the agitation of the fluid and the generation of foam. This effect is even more accentuated when the fitment assembly 10 is positioned at the side corner of the width with the length. The foaming of the beverage can also depend on the nature of the food or beverage ingredient. The invention enables the production of a range of different packs adapted for the agitation and dissolution of different types of beverage or food ingredients comprised in the containers.

The pack 100 can also comprise an excrescence (not shown) enabling the handling of the pack 100 by the user or consumer, typically on the top edge 214 of the pack or on one of the lateral edges 212, 213.

The fluid inlet 110 is typically enclosed in the complete pack 100 by the sheet(s) of material defining the inner volume of the container 20: the yieldable cover over the fluid inlet 110 piercable by the piercing means 30 of the machine is therefore made by the sheets of material covering this fluid inlet 110, so it is not necessary to prepare any supplementary cover or membrane to go over it, the manufacturing being easy and convenient. Consequently the same piece of material can be used to simultaneously create the inner volume of the container 20 and to close the fluid inlet 110. As such, the invention provides a pack 100 that is easy to manufacture and which guarantees hygienic and shelf life protection of the food and beverage ingredients and of the produced food or beverage product.

Preferably, the introduction of the fitment assembly 10 in the bottom edge of the container 20 during the sealing of its edges to configure the complete pack 100 makes it possible that the flexible sheet can cover the part of the fitment assembly 10 including the fluid inlet 110. Consequently during the single step of bonding the edges of the sheet, it is possible to simultaneously create the inner volume for storing the food or beverage ingredient, place the fitment assembly 10 and close the fluid inlet 110. Preferably the dispensing outlets are not covered by the sheets. Yet they can be visually hidden by a part of the sheet e.g. by a skirt of the sheet. Also preferably, according to the invention, the fitment assembly 10 comprises ribs 16 arranged in at least one of the external surfaces of the fitment assembly 10 for improving the adhesion of the fitment with the flexible material sheet during sealing. In particular a raising edge can surround the fluid inlet so as to improve air and water tightness around it.

According to the invention, either the fitment assembly 10 and/or the food or beverage container 20 preferably comprise identification means 60 comprising the information of the parameters for the fluid supply into the fluid inlet 110, at least one or a combination of: flow rate of fluid supplied into the fluid inlet 110, temperature at which the said fluid is supplied into the fluid inlet 110, total volume of fluid introduced in the fluid inlet 110. The fluid can be supplied in the fluid inlet 110 at any temperature, cold, ambient or hot, depending on the type of food or beverage product targeted. Such identification means 60 can comprise any kind of recognition means such as, for example, mechanical codes, optical codes, RFID tags, magnetic tags, bar codes, magnetic codes, punched holes, perforations, or the like.

A preferred way of configuring the identification means 60 is to make them as detection holes on one lateral edge of the food or beverage container 20 in the area of the flexible sheets being bonded together where there is no food or beverage ingredient preventing the arrangement of these detection holes. When the two sheets are brought together and are welded on the edges to configure the container 20, on one of these lateral edges, additional welding with circumferential shape will be provided, thus configuring the detection holes by punching. Another way could be to reproduce several times a miniature code printed on the surface of the sheet of material, for example.

Preferably, according to the invention, the pack 100 presents a plane shape oriented along a plane P essentially vertically oriented during beverage production and the fluid inlet 110 orientates the jet 6 of fluid in a direction comprised in said plane. The fluid jet introduced from the bottom into the inner volume of the container 20 is developing into circular and spiral movements creating turbulences, frictions and high contact surfaces between the fluid molecules (typically, water molecules) and the ingredient particles. In average the fluid molecules have several turns within the container until they leave it together with the beverage or food product once mixed. Best results (reconstitution) have been observed with a pack of rectangular shape. Packs with a fitment assembly placed in the corner of a rectangular pack have also been found to improve reconstitution.

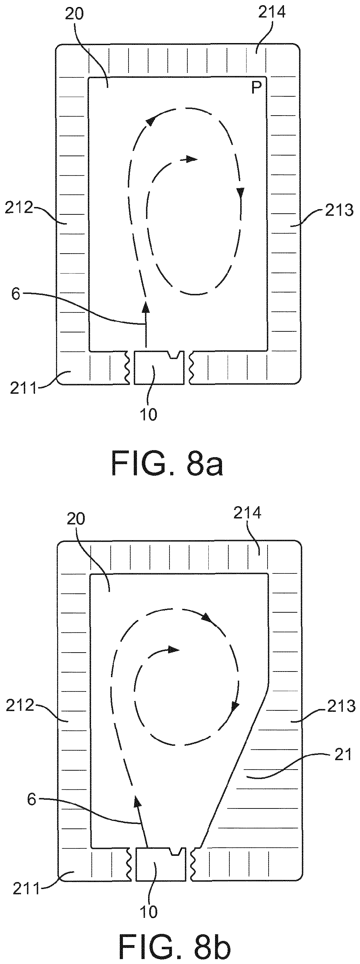

Also as shown in Figure 8b, the food or beverage container 20 preferably comprises at least one, more preferably two sloped areas 21 symmetrically arranged presenting slanted shapes in the vicinity of the fitment assembly 10 converging towards the fitment assembly 10, which enhance and facilitate the dispensing of all the product inside the container through the dispensing outlets 120, 130, such that a minimized quantity of it can be left inside the container 20, therefore avoiding that beverage or food ingredients remain blocked in these corners. The sloped areas 21 can be obtained by sidewise sealing the corners of the containers. The food or beverage containers 20 can present various external shapes like rectangular, square or round shapes. The inner volume of these containers would preferably present a shape configured for improving the movement of the fluid and the food or beverage ingredient in the container during product preparation.

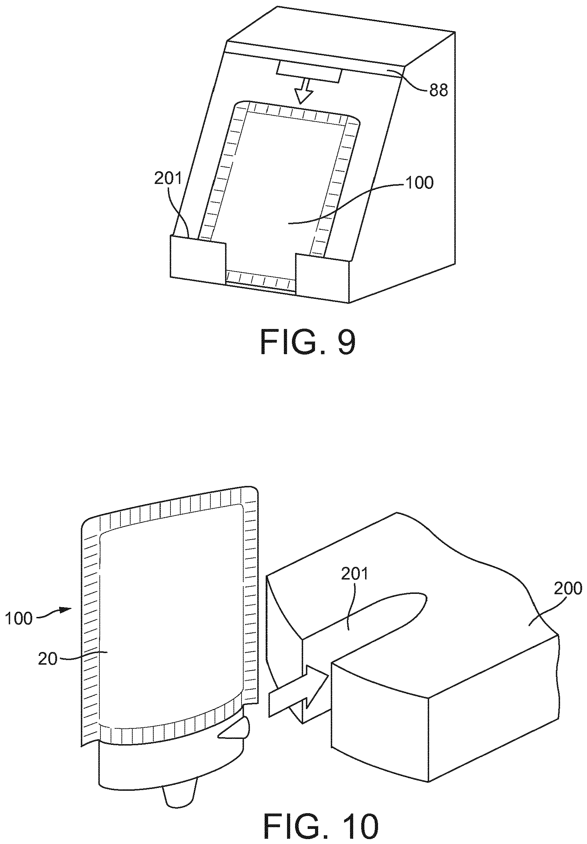

According to another aspect, the invention refers to a *food or beverage preparation machine 200* for preparing a food or beverage product from a pack 100 as described previously. The machine 200 comprises receiving means 201 adapted to accommodate the pack 100 preferably in such a way that the pack 100 is positioned vertically and the fitment assembly 10 is positioned at the bottom of the pack 100. The machine 200 further comprises piercing means 30 designed for engaging with the fitment assembly 10 and for injecting high pressure fluid inside the fluid inlet 110 of the fitment assembly 10. Typically, as the pack 100 is processed to obtain the beverage or food product in an essentially vertical position in the machine 200, the pack 100 will be introduced either frontally in the machine 200 (as schematically represented in Figure 9, showing a slanted positioning or the pack 100, though the pack can be also preferably arranged vertically in the machine) or laterally, so that the pack 100 is slidably inserted into a dedicated insert in the machine 200 (as schematically represented in Figure 10).

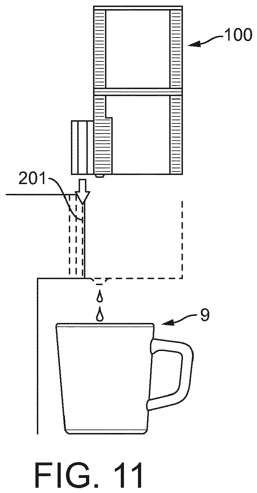

Figures 9, 10 and 11 illustrate examples of the receiving area 201 in the food or beverage preparation machine 200 for the pack 100 according to the present invention. Figure 10 illustrates the introduction of the pack 100 in the machine 200 according to a globally horizontal sliding movement whereas Figure 11 illustrates the introduction of the pack 100 according to a vertical sliding movement and Figure 9 illustrates the simple positioning of the pack on a slightly slanted plane (it should also be noted that the pack can be arranged vertically in the machine, not under a slanted positioning) and the closure of a sliding cover 88 - e.g. a transparent cover - above the pack to launch the beverage preparation. Other configurations of the receiving area 201 and other movements are possible depending on the positions of the fluid inlet 110 in the pack 100 (horizontally or vertically oriented, perpendicular to or inside the main plane of the pack) and on the position of the fitment assembly 10 in the pack 100 (in the corner, in the middle of the bottom).

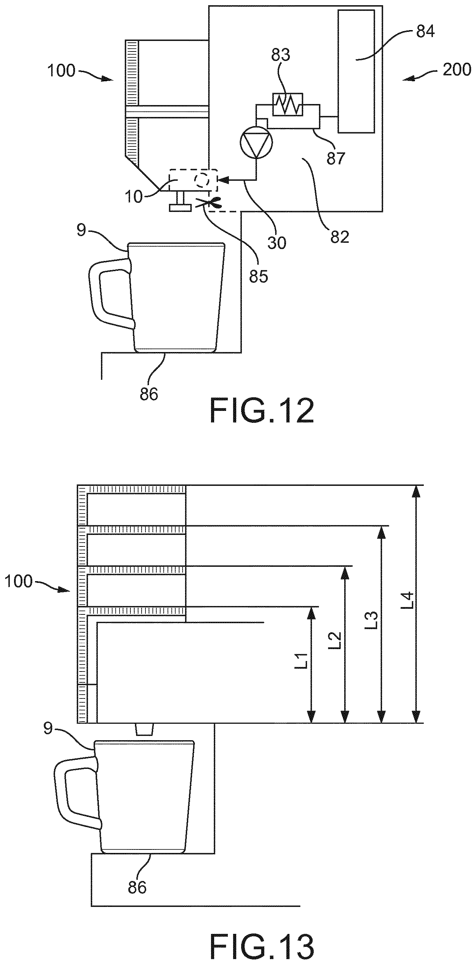

Figure 12 illustrates the interaction of a pack 100 according to the present invention with a food or beverage preparation machine 200. As illustrated, the machine 200 comprises at least:
- a fluid tank 84,
- a heater 83 for heating the fluid
- a bypass line 87 for delivering fluid at ambient temperature,
- a valve (not illustrated) for the selection of either hot or ambient fluid,
- a pump 82 for pumping fluid,
- optionally, a cooling unit (not shown) can also be provided in the machine 200 for delivering cold fluid,
- piercing means 30 for injecting fluid in the fluid inlet 110 and optionally for piercing the external lid over the fluid inlet 110.

The machine 200 also comprises a data reader, preferably comprising an optical device, which reads and retrieves the information from the identification means 60 regarding the process parameters to be used for preparing the food or beverage product from the pack 100. Preferably, the process parameters used by the machine 200 to prepare the correct recipe of the product in the pack 100, retrieved by the data reader, would be at least one or a combination of: temperature of the fluid (typically water) introduced by the piercing and injecting means in the inlet chamber 120; total volume of water introduced in the inlet chamber 120; and water flow provided through the piercing and injecting means also into the inlet chamber 120. Other process parameters can be for example pulse parameters like duration of jet phase and pause in between jet phases.

Preferably, the data reader will retrieve the information from the identification means 60 in the pack 100 by a light emitter device emitting light passing through punched holes configuring in a preferred embodiment the identification means 60. Another possible embodiment would be to use a printed code reader.

Preferably the machine comprises a positioning area 86 for allocating a drinking cup 9 under the dispensing outlets 120, 130 of the pack 100 when a food product or a beverage is prepared.

Also preferably, the machine 200 further comprises a cutting device 85 for cutting the closing plugs 127, 137 of the dispensing outlets 120, 130 of the pack 100 when the pack 100 presents said closing plugs as illustrated for example in Figures 4a-b-c-d or Figures 5a-b-c-d. The cutting device 85 can be positioned so that the closing plugs 127, 137 of the dispensing outlets 120, 130 are automatically cut when the pack 100 is introduced in the machine 200 or when the food or beverage preparation is activated.

Figures 3b or 4b illustrate a possible embodiment of the fitment assembly 10 wherein the inlet 110 and the outlets 120, 130 are holes inside one same fitment assembly 10, the fluid inlet 110 being arranged essentially perpendicularly with respect to the injection hole 111. Such a fitment assembly 10 enables cooperation with a beverage machine presenting a configuration such as described in Figure 12. The pack 100 presents a generally plane shape, being oriented along a plane P essentially vertically oriented during beverage production when the piercing means 30 of a beverage preparation machine are introduced in the fluid inlet 110 as illustrated in Figure 3. The pack can be almost flat in the direction perpendicular to plane P.

Due to the orientation of the pack 100 the food or beverage ingredient usually stands at the bottom of the inner volume of the container 20 when the pack 100 is in position for beverage preparation. Consequently when water is introduced in the fitment assembly 10 next to the bottom of the pack 100 it immediately penetrates the food or beverage ingredient and agitates it. The dissolution starts very rapidly. Moreover as the beverage or food issued from the dissolution of the ingredient with water flows down in the pack then said beverage or food is agitated again as long as water is introduced in the pack.

Preferably, the fluid inlet 110 is configured so as to create a jet of water inside the inner volume of the container 20 through the injection hole 111. The fluid inlet 110 is configured for introducing the water jet 6 in the inner volume of the pack at a high velocity. This velocity aims at:
- agitating the food or beverage ingredient in the inner volume of the pack,
- maintaining the circulation of the food or beverage ingredient, the water and the resulting beverage in the inner volume and avoiding that food or beverage ingredient is dispensed by the dispensing outlets 120, 130 before it has been sufficiently agitated and dissolved.

Depending on the nature of the food or beverage ingredient the high velocity water jet 6 can create an emulsion with the water and the fats or oils issued from the ingredients. As a result a beverage with particular good mouth feel can be obtained. In the case of production of a coffee espresso, a coffee with crema can be directly obtained from the pack without adding particular foaming additives in the beverage ingredient or without post treating the beverage to get the desired crema.

According to the invention, a water jet 6 presenting a velocity of at least 20 m/s enables an optimal dissolution of food or beverage ingredient in the inner volume. A jet of water with high velocity can be created in the inner volume by injecting water through a small orifice (that of the injection hole 111). The fluid inlet 110 can present a small section along all its length or it can present a constriction presenting such a small section. Usually this last implementation is preferred. The size of the section to get a jet of water in the inner volume usually depends from the pressure of the water introduced in the fluid inlet 110 by the food or beverage preparation machine.

The velocity of the water jet 6 emerging from the injection hole 111 usually depends on the pressure of the water introduced at the fluid inlet 110. The invention generally applies for water pressurised between 2 and 10 bar, preferably at about 7 bar. For such values of pressurized water the injection hole 111 presents a transverse section with a surface area equivalent to the surface of a circular surface of diameter comprised between 0,2 and 0,8 mm, preferably between 0,3 and 0,5 mm and even more preferably of about 0,4 mm. However, when water is pressurized at more than 11 bar the injection hole 11 presents a transverse section with a surface area equivalent to the surface of a circular surface of diameter comprised between 0, 5 and 1, 5 mm, preferably of about 1 mm.

For the same diluent supply pressure the surface of the injection hole 111 can vary according to the nature of the food and beverage ingredient inside the pack 100. In particular when the ingredient is difficult to dissolve a smaller injection hole 111 creates a jet 6 with a higher velocity which improves agitation and dissolution of the ingredient in the pack.

Figures 8a-b illustrate the movement of the liquid in the inner volume of a pack 100 in the main plane P. The pack 100 presents lateral and bottom sealed edges 211, 212, 213. The bottom sealed edge 211 has been made partly transparent to show the fitment assembly 10 comprising the fluid inlet 110 and the dispensing outlets 120 and 130. In such a pack the water jet 6 emerges with high velocity from the fluid inlet 110 placed at the bottom, then flows upwardly and develops in a circular and spiral movement inside the main plane P of the pack. Due to this movement the liquid in the inner volume is not directed to the outlets 120, 130 and keeps moving according to this movement, which enables agitation and optimised dissolution of the food or beverage ingredient. After a certain delay of time, the food or beverage flows out of the pack through both of the dispensing outlets 120 and 130. The section of the dispensing outlets is sufficiently large to create a gentle flow in the dinking cup placed under the outlets and receiving the food o beverage product. The pack totally empties due to the position of the outlets next to the bottom of the pack.

Figure 8b illustrates a pack 100 according to the invention presenting an optimised internal shape of its inner volume. It presents the same feature as the pack of Figure 8a except that the seal on the lateral edge 213 is made larger at the bottom corner of the pack so as to configure the inner volume with a sloped area 21 in an internal corner of the container. The water jet 6 emerging from the injection hole 111 develops in a circular movement and the slanted edge reinforces this movement alive by reorienting the movement upwards when it comes downwards. Such an embodiment can be particularly interesting for food or beverage ingredients that are difficult to dissolve and that must be strongly agitated. This configuration also enables to guide and push all the dose of food or beverage ingredient above the fluid inlet 110 in the inner volume of the pack. Then the contact between the food or beverage ingredient and water is improved at the point where the water flow presents its higher velocity and agitation strength.

Although the bottom corner is represented in Figure 8b as completely internally sealed, it is also possible to create a simple sealing line inside the inner volume of the pack to prevent liquid from circulating in the corner.

According to yet another possible embodiment of the invention, the fitment assembly 10 can further comprise an evacuating liquid outlet (not shown) for evacuating any liquid from the inner pack in case of need or emergency: the evacuating liquid outlet consists of a large hole communicating with the large hollowed out volume at the upper surface of the fitment assembly 10. This large hole decreases the risk of presence of blocking elements in this area and guarantees a good evacuation of the liquid from the pack through the evacuating liquid outlet in case of emergency. Typically, the flexible sheet laid over the fluid inlet 110 is also laid over the evacuating liquid outlet, which will be pierced by the piercing means 30 in case of emergency.

Figure 2 illustrates a *method for manufacturing a pack 100* according to the invention from a flexible sheet of material, which typically comes from a roll. First the sheet of material that preferably presents a rectangular shape is folded in its middle and the superposed lateral edges are bonded together which creates pouch with bonded lateral edges 212, 213 and a folded edge 214. The folded edge 214 can also eventually be sealed to give a comparable aspect as the lateral edges for aesthetic aspect. Then food or beverage ingredient is introduced in the pouch. Then the fitment assembly 10 is placed between the two last opened edges and these edges are bonded together and around the fitment assembly 10 to simultaneously close the pack, position the fitment and close the fluid inlet 110. According to a less preferred embodiment the fluid inlet and the dispensing outlets can be made in separate parts.

The pack can also comprise at least two fluid inlets. Depending on the kind of cooperation of the pack with the beverage preparation machine, in particular if the dispensing outlets are positioned at the bottom centre of the pack, the pack can comprise two inlets symmetrically positioned around the beverage outlets. This embodiment allows a higher flow into the pack 100 therefore providing a better dissolution of the food or beverage product comprised in its inner volume.

Whatever the above described embodiments the fluid inlet 110 can be oriented in the pack 100 according to two different variants, as it will be further explained now.

According to one first variant the fluid inlet 110 can be positioned in the pack 100 so that it is almost totally essentially vertically oriented during the beverage production. Then the fluid inlet 110 can be placed at any part along the bottom of the pack 100. Usually according to this first variant the fluid inlet 110 is a straight tube, preferably in an insert positioned at the bottom of the pack 100. The insert can be positioned between two flexible water impermeable sheets 21, 22 joined to one another and forming the inner volume. In this first variant the fluid inlet 110 and the dispensing outlets 120, 130 are usually globally parallel vertically oriented tubes.

According to a second variant the fluid inlet 110 can be at least partially essentially horizontally oriented during beverage production. In this second variant the fluid inlet 110 and the dispensing outlets are globally perpendicular one with respect to the other. According to this second variant the fluid inlet 110 is generally positioned in one lateral side of the pack 100 and next to the bottom of said lateral side (see for example Figure 1 or Figure 3).

In a first mode of this second variant the fluid inlet 110 can be an almost straight tube in an insert; accordingly the fluid inlet 110 is configured so that there is no change of direction of the flow water in the fluid inlet 110 to the injection hole 111. Said insert is preferably positioned between the two flexible water impermeable sheets 21, 22 joined to one another.

In a second mode of this second variant the fluid inlet 110 can be configured so that the direction of the water flow in the injection hole 111 is almost perpendicular to the direction of the water flow injected in the fluid inlet 110. In this embodiment the internal design of the fluid inlet 110 enables a globally perpendicular change of orientation of the water flow from the fluid inlet 110, facing the external part of the pack 100, to the injection hole 111, facing the internal part of the pack 100.

In said second mode the external end of the water inlet preferably comprises an inlet chamber 112 which comprises an evacuation end, said evacuation end being an injection hole 111 configured for directing a jet of water 6 in the inner volume of the pack 100 in a direction almost perpendicular to the longitudinal axis of the inlet chamber 112. Preferably the inlet chamber 112 is globally horizontally oriented. This chamber is usually configured for receiving a hollow needle for injecting water, typically configuring the piercing means 30. It generally presents a circular section. This chamber presents the advantage of creating a distance between the end of the hollow needle and the inner volume which stores the food or beverage ingredient and consequently avoids the contamination of the needle. The evacuation end can be configured for delivering water under the form of a jet 6 in the inner volume of the pack 100 as described in the above first embodiment. Most preferably the chamber evacuation end is a hole pierced in the lateral wall of the chamber, configuring the injection hole 111.

It is preferred that the pack 100 presents a generally plane shape essentially vertically oriented during food or beverage production. According to the present second mode of the second variant for the fluid inlet 110 the inlet chamber 112 is preferably perpendicular to said plane. Then the fluid inlet 110 and the dispensing outlets are generally perpendicularly oriented with respect to each other. Consequently the inlet and the outlets emerge on different sides of the pack 100. This configuration limits the contamination risk of the means for introducing water in the fluid inlet 110 by the beverage dispensed by the dispensing outlets 120, 130.

Whatever the variant and the mode for the fluid inlet 110 said fluid inlet 110 can be also configured for orienting the water jet 6 in direction of the dispensing outlets 120, 130. Such a configuration enables the agitation of the food or beverage by the water jet 6 before it evacuates through the dispensing outlets 120, 130. According to a particular mode the packs 100 designed for producing a jet of water 6 that is globally horizontally oriented are particularly interesting for avoiding the clogging of the food or beverage ingredient. The water jet 6 avoids that the food or beverage flows through the outlets too rapidly and increases the time of agitation of the ingredient in the pack 100.

Different embodiments of the pack 100 described here above can be combined together and would still be comprised within the scope of the present patent application.

The invention also refers to a *range of packs* such as described here above wherein the packs differ by the size of the inner volume and/or the internal dimension of the outlet and/or the internal dimension of the inlet and/or the orientation of the inlet and/or the orientation of the outlet. A wide range of different sachets can be used for producing different types of food or beverages. The external design of the fitment assembly 10 remains the same whereas the inner volume of the pack (with respect to vertical size or height) can be adapted to store different quantities of ingredients. It becomes possible to produce a cup of espresso coffee or a bowl of soup. The internal design of the fitment assembly 10 can be adapted according to the nature of the food or beverage ingredient inside the pack 100.

Figure 13 illustrates the possibility to create a range of packs with the same fitment assembly 10: it is therefore possible to produce a range of packs differing by the size of the inner volume (L1, L2, L3, L4) and configured for preparing a food or beverage product with the same food or beverage preparation machine.

Furthermore, the invention also refers to a *method for preparing a food or beverage product* from a pack 100 as described before, and using a food or beverage preparation machine 200, comprising the following steps:
- providing a pack 100 such as described previously or a pack from a range of packs such as described here above and positioning said pack with the fitment assembly 10 positioned downwardly;
- injecting water into the pack 100 to mix with the food or beverage ingredient;
- allowing the prepared beverage or food product to escape through the dispensing outlets into a receptacle.

Preferably the method is implemented by a food or beverage preparation machine 200 in which the different steps are implemented. Water is generally injected by piercing the pack 100 with a hollow needle at the fluid inlet 110 of the pack 100.

The packs 100 of the invention, as described previously, present several *advantages,* as will be detailed in what follows herewith.

The present invention presents the advantage of proposing packs 100 for the preparation of food or beverages wherein a broad range of different foods and beverages can be produced with the same machine. The foods and beverages can differ by their natures (coffee, tea, chocolate, soup, etc.), by their aspects (presence of crema for coffee, of foam for milk and chocolate, absence of bubbles for tea, etc.), by their volumes (from espresso volume up to soup volume) and be obtained by the same machine. The machine elements can remain very simple and limited to a simple water needle.

The present invention presents the advantage of proposing a consumer friendly preparation of foods and beverages. The beverage of food delivered from the pack is ready to be served and does not require an additional process step, for example for foaming the beverage.

The present invention presents the advantage of proposing packs wherein the ingredients are fully protected from atmosphere before use.

The present invention presents the advantage of proposing packs or preparing beverages wherein the contact of ingredients and prepared beverage with the machine is avoided and the risk of cross contamination is limited. The prepared beverages present optimal organoleptic properties.

The present invention presents the advantage of proposing packs presenting a low environmental impact since it can be made of a laminated pouch with a small insert piece of plastic.

The present invention presents the advantage of proposing packs of global similar shapes but with particular internal difference in order to deal with the preparation of various beverages from various food or beverage ingredients presenting different properties like difference of dissolution, ability to clog, difference of volume, etc.

This is one key element of temper evidence proof allowing the consumer to detect if the sachet has been tempered before.

The present invention presents the advantage of proposing packs which can be very easily produced starting from flexible sheets and one single insert, for the simplest embodiment. In particular the pack usually does not comprise an internal filter or membrane to be positioned in the inner volume during manufacturing.

Reduced manipulations to be done on the side of the consumer are also a big advantage on the user's side, achieving best in-cup results.as process parameters are given by the identification means 60 in the pack 100.

The space needed for the consumer to store the packs 100 according to the invention clearly much less than that for typical capsule containers, for example.

Although the present invention has been described with reference to preferred embodiments thereof, many modifications and alternations may be made by a person having ordinary skill in the art without departing from the scope of this invention which is defined by the appended claims.

### LIST OF REFERENCES

- 100: Disposable pack
211 Bottom edge of pack
212 Lateral edge of pack
213 Lateral edge of pack
214 Top edge of pack
60 Identification means
6 Water jet
- 10: Fitment assembly
110 Fluid inlet
120 Primary dispensing outlet
130 Secondary dispensing outlet
111 Injection hole
121 Opening of primary dispensing outlet
131 Opening of secondary dispensing outlet
122 Weakened area in primary dispensing outlet
132 Weakened area in secondary dispensing outlet
127 Closing plug of primary dispensing outlet
137 Closing plug of secondary dispensing outlet
128 Plastic bond of primary dispensing outlet
138 Plastic bond of secondary dispensing outlet
16 Ribs of fitment assembly
112 Inlet chamber
45 Internal conduit
61a Transverse plate
61b Holes
62a Transverse plate
62b Holes
44 Connection plug-outlet
150 Insert body
500 Hollowed out part
61 Design adaptor
62 Design adaptor
63 Mixing device
631 Blades
631' Blades
632 Longitudinal axis
- 20: Food or beverage container
21 Flexible sheet
22 Flexible sheet
21 Sloped area
- 200: Food or beverage preparation machine
9 Drinking cup
30 Injecting means
201 Receiving area
85 Cutting device
84 Fluid tank
83 Heater
87 Bypass line
82 Pump
86 Positioning area
88 Sliding cover

## Claims

1. A pack (100) having an inner volume in which a food or beverage ingredient is stored and in which a food or beverage product is produced when a fluid is introduced inside,
said inner volume being defined by sheets of material joined to one another at their edges and said inner volume presenting a generally plane shape defining a plane (P) essentially vertically oriented during beverage production,
said pack (100) comprising at least one fluid inlet (110) for supplying a fluid in the inner volume and at least two dispensing outlets (120, 130) for delivering the food or beverage product from said inner volume, said fluid inlet(s) (110) and said dispensing outlets (120, 130) being positioned at the bottom of the pack (100) and being at least partially positioned between two joined edges of the sheets of material,
the fluid inlet (110) being oriented essentially perpendicularly to the plane (P) defined by the inner volume,
the dispensing outlets (120, 130) being arranged in the vicinity one with respect to the other and presenting a sufficient section to enable a flow of the food or beverage product form the pack (100), the pack being **characterized in that** the at least two dispensing outlets (120, 130) differ by their internal design for providing different effects, at least one or a combination of: foam improvement, product mixing improvement, break foam to remove the foam, or outlet diameter adjustment.

2. A pack (100) according to claim 1 wherein the internal design of at least one of the dispensing outlets comprises at least one transverse plate with at least two holes, said holes having a design configured for breaking bubbles while the beverage or product flows through.

3. A pack (100) according to claim 2 wherein the holes have the shape of triangles positioned one to the other so as to form a grid of straight lines.

4. A pack (100) according to claim 1 wherein the internal design of at least one of the dispensing outlets comprises a mixing device (63), preferably comprising mixing blades.

5. A pack (100) according to any of the previous claims wherein the at least two dispensing outlets (120, 130) are configured as essentially parallel tubes arranged essentially vertically from the inner volume.

6. A pack (100) according to any of the previous claims wherein the at least two outlets (120, 130) have the same or different diameter.

7. A pack (100) according to any of the previous claims wherein the diameter of each of the at least two outlets (120, 130) is comprised in the range of about 1 mm to 6 mm.

8. A pack (100) according to any of the previous claims wherein the fluid inlet (110) is configured as a through hole so that fluid can be introduced through the fluid inlet either frontally or in a reverse positioning of the pack (100).

9. A pack (100) according to any of the previous claims wherein the pack (100) comprises a fitment assembly (10) including the fluid inlet (110) and the dispensing outlets (120, 130), said fitment assembly (10) being positioned at the bottom of the pack (100) and being partially positioned between two joined edges of the sheets of material.

10. A pack (100) according to any of claims 1-5 wherein the at least two dispensing outlets (120, 130) are made in separate inserts, the inserts being arranged at the bottom of the pack (100) and being partially positioned between two joined edges of the sheets of material.

11. A pack (100) according to any of the previous claims also comprising an evacuating liquid outlet which can be pierced for evacuating liquid from the inner volume of the pack (100).

12. A pack (100) according to any of the previous claims wherein the fluid inlet (110) is configured for providing an orientable high velocity jet (6) into the inner volume of the pack (100).

13. A pack (100) according to claim 12 further comprising identification means (60) comprising the parameters information for the fluid supply into the fluid inlet (110), at least one or a combination of: flow rate of fluid, temperature of fluid supply, total volume of fluid introduced in the fluid inlet (110), and/or duration of the jet supplied and/or pause in between jets.

14. Machine (200) for preparing a food or beverage product from a pack (100) according to any of claims 1-13, the machine (200) comprising a receiving area (201) adapted to accommodate the pack (100) in an essentially vertical position during beverage production with the fluid inlet (110) and the at least two dispensing outlets (120, 130) being arranged at the bottom of the pack (100), the machine further comprising injecting means (30) designed for accommodating fluid into the fluid inlet (110).

15. Machine (200) according to claim 14 further comprising a data reader retrieving the parameters information for the fluid supply into the fluid inlet (110), at least one or a combination of: flow rate of fluid, temperature of fluid supply and/or total volume of fluid introduced in the fluid inlet (110) and/or duration of the jet supplied and/or pause in between jets.

## Patentansprüche

1. Packung (100), die ein Innenvolumen aufweist, in dem ein Nahrungsmittel- oder Getränkeinhaltsstoff aufbewahrt wird, und in dem ein Nahrungsmittel- oder Getränkeprodukt erzeugt wird, wenn eine Flüssigkeit darin eingebracht wird,
wobei das Innenvolumen definiert ist durch Materialfolien, die miteinander an ihren Kanten verbunden sind, und das Innenvolumen eine im Allgemeinen ebene Form darstellt, die eine Ebene (P) definiert, die während der Getränkezubereitung im Wesentlichen vertikal ausgerichtet ist,
wobei die Packung (100) mindestens eine Flüssigkeits-Einlassöffnung (110) zum Einleiten einer Flüssigkeit in das Innenvolumen und mindestens zwei Abgabeauslässe (120, 130) zur Abgabe des Nahrungsmittel- oder Getränkeprodukts von dem Innenvolumen umfasst, wobei der (die) Flüssigkeitseinlass (-einlässe) (110) und die Abgabeauslässe (120, 130) an der Unterseite der Packung (100) angeordnet sind und mindestens teilweise zwischen zwei verbundenen Kanten der Materialfolien positioniert sind,
wobei der Flüssigkeitseinlass (110) im Wesentlichen senkrecht zur Ebene (P) ausgerichtet ist, die durch das Innenvolumen definiert wird,
die Abgabeauslässe (120, 130) jeweils benachbart zueinander angeordnet sind und einen ausreichenden Querschnitt aufweisen, um einen Strom des Nahrungsmittel- oder Getränkeprodukts aus der Packung (100) zu ermöglichen,
die Packung **dadurch gekennzeichnet ist, dass** die mindestens zwei Abgabeauslässe (120, 130) sich durch ihre innere Auslegung unterscheiden, um unterschiedliche Wirkungen zu erzielen, mindestens eines oder eine Kombination von: Schaumverbesserung, Produktmischverbesserung, Brechen von Schaum zum Entfernen des Schaums oder Verstellen des Auslassdurchmessers.

2. Packung (100) nach Anspruch 1, wobei die innere Auslegung von mindestens einem der Abgabeauslässe mindestens eine Querplatte mit mindestens zwei Öffnungen umfasst, wobei die Öffnungen eine Auslegung aufweisen, die dazu konfiguriert ist, Luftblasen aufzubrechen, während das Getränk oder Produkt hindurchfließt.

3. Packung (100) nach Anspruch 2, wobei die Öffnungen die Form von Dreiecken aufweisen, die so zueinander angeordnet sind, dass sie ein Netz von geraden Linien bilden.

4. Packung (100) nach Anspruch 1, wobei die innere Auslegung von mindestens einem der Abgabeauslässe eine Mischvorrichtung (63) umfasst, die vorzugsweise Mischflügel umfasst.

5. Packung (100) nach einem der vorstehenden Ansprüche, wobei die mindestens zwei Abgabeauslässe (120, 130) als im Wesentlichen parallele Rohre konfiguriert sind, die im Wesentlichen vertikal vom Innenvolumen angeordnet sind.

6. Packung (100) nach einem der vorstehenden Ansprüche, wobei die mindestens zwei Auslässe (120, 130) denselben oder unterschiedliche Durchmesser aufweisen.

7. Packung (100) nach einem der vorstehenden Ansprüche, wobei der Durchmesser von jedem der mindestens zwei Auslässe (120, 130) im Bereich von ungefähr 1 mm bis 6 mm liegt.

8. Packung (100) nach einem der vorstehenden Ansprüche, wobei der Flüssigkeitseinlass (110) als Durchgangsöffnung konfiguriert ist, so dass Flüssigkeit durch den Flüssigkeitseinlass entweder frontal oder in umgekehrter Anordnung der Packung (100) eingeführt werden kann.

9. Packung (100) nach einem der vorstehenden Ansprüche, wobei die Packung (100) eine Ausstattungsanordnung (10) umfasst, einschließlich des Flüssigkeitseinlasses (110) und der Abgabeauslässe (120, 130), wobei die Ausstattungsanordnung (10) an der Unterseite der Packung (100) angeordnet und teilweise zwischen zwei verbundenen Kanten der Materialfolien angeordnet ist.

10. Packung (100) nach einem der Ansprüche 1-5, wobei die mindestens zwei Abgabeauslässe (120, 130) in getrennten Einsätzen hergestellt sind, wobei die Einsätze an der Unterseite der Packung (100) angeordnet und teilweise zwischen zwei verbundenen Kanten der Materialfolien angeordnet sind.

11. Packung (100) nach einem der vorstehenden Ansprüche, ebenfalls umfassend einen Ableitungs-Flüssigkeitsauslass, der zum Ableiten von Flüssigkeit aus dem Innenvolumen der Packung (100) durchstoßen werden kann.

12. Packung (100) nach einem der vorstehenden Ansprüche, wobei der Flüssigkeitseinlass (110) dazu konfiguriert ist, einen ausrichtbaren Hochgeschwindigkeitsstrahl (6) in das Innenvolumen der Packung (100) bereitzustellen.

13. Packung (100) nach Anspruch 12, weiterhin umfassend Kennzeichnungsmittel (60), die die Parameterinformationen für die Flüssigkeitszufuhr in den Flüssigkeitseinlass (110) umfassen, mindestens eines oder eine Kombination von: Fließgeschwindigkeit der Flüssigkeit, Temperatur der Flüssigkeitszufuhr, Gesamtvolumen der in den Flüssigkeitseinlass (110) eingeleiteten Flüssigkeit, und/oder Dauer des zugeführten Strahls und/oder Pause zwischen den Strahlen.

14. Maschine (200) zum Zubereiten eines Nahrungsmittel- oder Getränkeprodukts aus einer Packung (100) nach einem der Ansprüche 1-13, wobei die Maschine (200) umfasst: einen Aufnahmebereich (201), der dazu angepasst ist, die Packung (100) in einer im Wesentlichen vertikalen Position während der Getränkeerzeugung aufzunehmen, wobei der Flüssigkeitseinlass (110) und die mindestens zwei Abgabeauslässe (120, 130) an der Unterseite der Packung (100) angeordnet sind, wobei die Maschine weiterhin Mittel zum Einspritzen (30) umfasst, die zur Aufnahme von Flüssigkeit in den Flüssigkeitseinlass (110) ausgelegt sind.

15. Maschine (200) nach Anspruch 14, weiterhin umfassend ein Datenlesegerät, das die Parameterinformationen für die Flüssigkeitszufuhr in den Flüssigkeitseinlass (110) abruft, mindestens eines oder eine Kombination von: Fließgeschwindigkeit der Flüssigkeit, Temperatur der Flüssigkeitszufuhr und/oder Gesamtvolumen der in den Flüssigkeitseinlass (110) eingeleiteten Flüssigkeit, und/oder Dauer des zugeführten Strahls und/oder Pause zwischen den Strahlen.

## Revendications

1. Conditionnement (100) ayant un volume interne dans lequel un ingrédient de produit alimentaire ou de boisson est stocké et dans lequel un produit alimentaire ou une boisson est produit lorsqu'un fluide est introduit à l'intérieur,
ledit volume interne étant défini par des feuilles de matériau jointes l'une à l'autre au niveau de leurs bords et ledit volume interne présentant une forme généralement plane définissant un plan (P) orienté de façon sensiblement verticale pendant la production de boisson,
ledit conditionnement (100) comprenant au moins une entrée de fluide (110) pour fournir un fluide dans le volume interne et au moins deux sorties de distribution (120, 130) pour distribuer le produit alimentaire ou de boisson à partir dudit volume interne, ladite ou lesdites entrées de fluide (110) et lesdites sorties de distribution (120, 130) étant positionnées en bas du conditionnement (100) et étant au moins partiellement positionnées entre deux bords joints des feuilles de matériau,
l'entrée de fluide (110) étant orientée de façon sensiblement perpendiculaire au plan (P) défini par le volume interne,
les sorties de distribution (120, 130) étant agencées à proximité l'une de l'autre et présentant une section suffisante pour permettre un écoulement du produit alimentaire ou de boisson à partir du conditionnement (100),
le conditionnement étant **caractérisé en ce que** lesdites au moins deux sorties de distribution (120, 130) diffèrent par leur conception interne pour fournir différents effets, au moins l'un ou une combinaison parmi : une amélioration de la mousse, une amélioration du mélange de produit, une rupture de la mousse pour enlever la mousse, ou un réglage du diamètre de sortie.

2. Conditionnement (100) selon la revendication 1, dans lequel la conception interne d'au moins l'une des sorties de distribution comprend au moins une plaque transversale avec au moins deux trous, lesdits trous ayant une forme configurée pour casser des bulles lorsque la boisson ou le produit s'écoule.

3. Conditionnement (100) selon la revendication 2, dans lequel les trous ont la forme de triangles positionnés l'un par rapport à l'autre de manière à former une grille de lignes droites.

4. Conditionnement (100) selon la revendication 1, dans lequel la conception interne d'au moins l'une des sorties de distribution comprend un dispositif de mélange (63), comprenant de préférence des lames de mélange.

5. Conditionnement (100) selon l'une quelconque des revendications précédentes, dans lequel lesdites au moins deux sorties de distribution (120, 130) sont configurées sous forme de tubes sensiblement parallèles agencés de façon sensiblement verticale à partir du volume interne.

6. Conditionnement (100) selon l'une quelconque des revendications précédentes, dans lequel lesdites au moins deux sorties (120, 130) ont un diamètre identique ou différent.

7. Conditionnement (100) selon l'une quelconque des revendications précédentes, dans lequel le diamètre de chacune desdites au moins deux sorties (120, 130) est compris dans la gamme d'environ 1 mm à 6 mm.

8. Conditionnement (100) selon l'une quelconque des revendications précédentes, dans lequel l'entrée de fluide (110) est configurée comme un trou traversant de sorte que le fluide peut être introduit par l'entrée de fluide soit frontalement, soit dans un positionnement inverse du conditionnement (100).

9. Conditionnement (100) selon l'une quelconque des revendications précédentes, dans lequel le conditionnement (100) comprend un ensemble accessoire (10) comprenant l'entrée de fluide (110) et les sorties de distribution (120, 130), ledit ensemble accessoire (10) étant positionné en bas du conditionnement (100) et étant partiellement positionné entre deux bords joints des feuilles de matériau.

10. Conditionnement (100) selon l'une quelconque des revendications 1 à 5, dans lequel lesdites au moins deux sorties de distribution (120, 130) sont réalisées dans des inserts distincts, les inserts étant disposés en bas du conditionnement (100) et étant positionnés partiellement entre deux bords joints des feuilles de matériau.

11. Conditionnement (100) selon l'une quelconque des revendications précédentes comprenant également une sortie de liquide d'évacuation qui peut être percée pour évacuer un liquide du volume interne du conditionnement (100).

12. Conditionnement (100) selon l'une quelconque des revendications précédentes, dans lequel l'entrée de fluide (110) est configurée pour fournir un jet orientable haute vitesse (6) dans le volume interne du conditionnement (100).

13. Conditionnement (100) selon la revendication 12, comprenant en outre un moyen d'identification (60) comprenant les informations de paramètres pour l'alimentation de fluide dans l'entrée de fluide (110), au moins l'un ou une combinaison parmi : un débit du fluide, une température de l'alimentation de fluide, un volume total du fluide introduit dans l'entrée de fluide (110) et/ou une durée du jet fourni et/ou une pause entre les jets.

14. Machine (200) pour préparer un produit alimentaire ou de boisson à partir d'un conditionnement (100) selon l'une quelconque des revendications 1 à 13, la machine (200) comprenant une zone de réception (201) conçue pour recevoir le conditionnement (100) dans une position sensiblement verticale pendant la production de boisson avec l'entrée de fluide (110) et lesdites au moins deux sorties de distribution (120, 130) étant agencées en bas du conditionnement (100), la machine comprenant en outre un moyen d'injection (30) conçu pour recevoir un fluide dans l'entrée de fluide (110).

15. Machine (200) selon la revendication 14, comprenant en outre un lecteur de données récupérant les informations de paramètres pour l'alimentation de fluide dans l'entrée de fluide (110), au moins l'un ou une combinaison parmi : un débit de fluide, une température de l'alimentation de fluide et/ou un volume total de fluide introduit dans l'entrée de fluide (110) et/ou une durée du jet fourni et/ou une pause entre les jets.
